# EUROPÄISCHE PATENTSCHRIFT

(11) **EP 4 393 703 B1**
(45) Veröffentlichungstag und Bekanntmachung des Hinweises auf die Patenterteilung: **09.07.2025**
(21) Anmeldenummer: 23150044.8
(22) Anmeldetag: 02.01.2023
(51) Int. Cl.: B32B 38/08, B32B 37/24, B32B 29/00

(54) **VERFAHREN ZUR HERSTELLUNG EINES LAMINATES UMFASSEND MINDESTENS EINE KRAFTPAPIERLAGE UND MINDESTENS EINE WEITERE PAPIERLAGE**
METHOD FOR PRODUCING A LAMINATE COMPRISING AT LEAST ONE PLY OF KRAFT PAPER AND AT LEAST ONE OTHER PLY OF PAPER
PROCÉDÉ DE FABRICATION D'UN STRATIFIÉ COMPRENANT AU MOINS UNE COUCHE DE PAPIER KRAFT ET AU MOINS UNE AUTRE COUCHE DE PAPIER

(43) Veröffentlichungstag der Anmeldung: 03.07.2024
(73) Patentinhaber: SWISS KRONO Tec AG, 6004 Luzern (CH)
(72) Erfinder: DR. KALWA, Norbert, 32805 Horn-Bad Meinberg (DE)
(74) Vertreter: Maikowski & Ninnemann Patentanwälte Partnerschaft mbB

(56) Entgegenhaltungen:
- EP-B1- 3 144 449
- FR-A1- 3 115 229
- US-B2- 10 513 094
- ANONYMOUS: "Kraft paper - Wikipedia, the free encyclopedia", 21 July 2016 (2016-07-21), XP055292957, Retrieved from the Internet <URL:https://en.wikipedia.org/wiki/Kraft_paper> [retrieved on 20160802]

## Beschreibung

Die vorliegende Erfindung betrifft ein Verfahren zur Herstellung eines Laminates umfassend mindestens eine Kraftpapierlage und mindestens eine weitere Papierlage.

### Beschreibung

Laminate sind Schichtstoffe aus miteinander verpressten Papierimprägnaten, die auf Trägerplatten aufgebracht (aufkaschiert) werden. Derzeitig im Stand der Technik bekannt sind z.B. Laminate, bei denen der Schichtverbund mindestens eine imprägnierte Papierlage, wie z.B. ein Dekorimprägnat, mindestens eine Transparentpapierlage (Pergamin), z.B. mit Schwefelsäure behandeltes Pergamin, und/oder mindestens eine Kunststofffolienlage vorgesehen.

Es wird zwischen High Pressure Laminate (HPL) und Continuous Pressure Laminate (CPL) unterschieden. Bei HPL handelt es sich um ein im Hochdruckpress-Verfahren hergestelltes Laminat in Plattenform aus mehreren Lagen Papier und Harz. CPL wird im kontinuierlichen Verfahren aus mehreren Lagen Papier und Harz hergestellt. Es ist meist als Rollenware erhältlich und wird z. B. zur Herstellung von Arbeitsplatten, ummantelten Profilen und Türblättern verwendet. CPL werden im Durchlauf- oder Endlosverfahren in zweiseitig beheizten Rollenbandpressen verpresst.

Bei der Herstellung von CPL auf Doppelband-Pressen werden ebenso wie für HPL in der Kernlage harzimprägnierte Natronkraftpapiere (NKP) eingesetzt. Kraftpapiere weisen eine hohe Festigkeit auf und bestehen aus Zellstofffasern, denen Stärke, Alaun und Leim zugesetzt sind, um Oberflächeneffekte und Festigkeitssteigerungen zu erzielen. Während bei HPL üblicherweise mit Phenolharz imprägnierte NKP verwendet werden, werden für CPL NKP mit einem Gemisch aus Melamin- und Phenolharz eingesetzt. Der Harzauftrag für HPL-Kernlagen liegen üblicherweise bei 40 -50 Gew%. Für CPL-Kernlagen liegt er bei 80 - 90 Gew%.

Die Imprägnierung der Kernlagen erfolgt auf Imprägnierkanälen, die zum Teil mit Geschwindigkeiten > 100 m/min betrieben werden. Während HPL-Kernlagen als Bogenware produziert werden, werden CPL-Kernlagen als Rollenware hergestellt. Dies gilt auch für die restlichen an einer CPL-Anlage genutzten Imprägnate (Dekor-, Overlay- oder Gegenzugimprägnate). Lediglich in Ausnahmefällen wird mit Bogenware gearbeitet.

Da die Rollen je nach Papiergewicht mehrere Hundert Meter Länge haben können, stellen sie einen erheblichen Warenwert dar. Bei der Produktion der Rollen kann aber lediglich am Ende der Rolle eine Qualitätsbestimmung (Endgewicht, Harzauftrag, Feuchte) durchgeführt werden. Diese sagt aber nichts über den Harzauftrag und die Feuchte in der Rolle aus. Durch Schwankungen im Prozess (Temperatur der Imprägnierharze und NKP, Temperatur in Produktionshalle, Temperaturschwankungen im Trockenkanal usw.) oder im Rohstoff (Grammatur, Papierfeuchte usw.) können Imprägnatrollen entstehen, die an der CPL-Anlage zu Problemen führen. Dies können z. B. Delaminierungen, Verzüge usw. sein. Zwar könnte man durch die Installation einer on-line-Analytik (Nahinfrarot-Spektroskopie, Microwelle usw. ) den Prozess überwachen. Es verbleibt aber das Problem, dass auf Grund der hohen Produktionsgeschwindigkeiten, noch immer große Mengen an qualitativ nicht einwandfreiem Imprägnat entsteht, da zwischen der Detektion und der Korrektur noch immer Minuten Produktionszeit liegen.

Zudem produzieren viele Hersteller von CPL ihre Kernlagen nicht selbst, da ein schnelllaufender Imprägnierkanal meist deutlich mehr Imprägnierkapazität besitzt, als auf einer oder zwei CPL-Anlagen verarbeitet werden können. Aus Verschmutzungsgründen können aber auf einem Imprägnierkanal auf dem Phenolharze verarbeitet werden, keine dekorativen Papiere oder Overlays mit Melaminharzen getränkt werden. Dies ist selbst nach aufwändigen Reinigungen der Kanäle nicht möglich. Somit ist ein CPL-Hersteller von den am Markt verfügbaren Imprägnierqualitäten der Kernlagen abhängig. Falls diese an seiner Anlage zu Problemen führen hat er lediglich die Möglichkeit durch Veränderung der Anlagenparameter ( Temperatur, Anlagengeschwindigkeit und Druck ) die Mängel abzustellen. Besonders negativ ist dabei, dass die Belieferung mit Imprägnaten meist mit vollen Lkw's erfolgt. Damit hat der Produzent eine große Menge an Rollen im Lager, die nur nach "trail and error" auf ihre Einsetzbarkeit in der Produktion geprüft werden können.

Weiterhin stellt es sich häufig als Problem dar bestimmte Produkteigenschaften durch Zugabe von Hilfsstoffen in die Imprägnierbäder zu erzeugen. Teilweise sind die Hilfsstoffe schlecht wasserlöslich, teilweise führt die Zugabe zu Entmischungen in der Tränkwanne. Dies verkompliziert die Imprägnierung und macht die Erzeugung der gewünschten Eigenschaften schwierig oder gar unmöglich.

Weiter wird bei der Imprägnierung immer die gesamte Warenbahnbreite imprägniert. Dies kann später an der CPL-Anlage unter Druck und Temperatur zu Verschmutzungen der Pressbänder/Strukturgeber durch an den Rändern austretendes Harz führen. Man versucht dieses Problem durch den Auftrag von Lösemittel auf die Ränder vor der Imprägnierwanne zu lösen. Allerdings muss die Menge und die Positionierung der Düse überwacht werden. Zudem ist die Zeit zwischen dem Auftrag und dem Eintauchen in die Imprägierwanne wegen der hohen Geschwindigkeit relativ kurz, sodass eine gute Imprägnierung des Randbereichs nicht erreicht wird.

Es ergeben sich verschiedene Nachteile. So ist die Qualitätsbestimmung in der Rolle schwierig, ebenso wie die Änderung des Eigenschaftsprofils. Auch ist die Imprägnierung des Randbereiches problematisch und wasserunlösliche Hilfsstoffe können bei der Imprägnierung nicht verwendet werden.

Der Erfindung liegt daher die technische Aufgabe zu Grunde die oben geschilderten Mängel zu beheben. Dabei soll auch den geringen Bedarfen einer einzelnen CPL-Anlage Rechnung getragen werden. Auch die Anpassung der Imprägnate bezüglich Harzauftrag, Feuchte oder anderer Parametersollte schnell und präzise möglich sein. Weiterhin sollte auch die Zugabe von Hilfsstoffen zur Erzielung von Harz-/Produkteigenschaften einfach möglich sein. Zusätzlich sollten auch pulverförmige/faserförmige Füllstoffe ( Cellulose, Mehle, anorganische und organische Fasern usw. ) einsetzbar sein. Auch eine Anpassung an unterschiedliche Warenbahnbreiten sollte schnell möglich sein und Materialverluste vermeiden.

Diese Aufgabe wird durch ein Verfahren mit den Merkmalen des Anspruchs 1 gelöst.

Entsprechend wird ein Verfahren zur Herstellung eines Laminates, insbesondere eines CPL, umfassend mindestens eine Kraftpapierlage bereitgestellt, wobei das Verfahren die folgenden Schritte umfasst:
- Bereitstellen von mindestens einer Kraftpapierlage,
- Befeuchten der mindestens einen Kraftpapierlage;
- Aufstreuenvon mindestens einer ersten Schicht aus mindestens einem pulverförmigen Formaldehyd-Harz auf mindestens eine Seite der Kraftpapierlage,
- Auflegen von mindestens einer weiteren Papierlage auf die mit dem pulverförmigen Formaldehyd-Harz bestreuten Seite der Kraftpapierlage, und
- Verpressen des Schichtaufbaus in einer CPL-Presse.

Es wird demnach ein mehrstufiges Verfahren bereitgestellt, bei dem Harzpulver auf eine Kraftpapierlage unmittelbar vor einer CPL-Anlage aufgebracht wird. Wie später noch im Detail beschrieben wird, kann dies durch Streuer erfolgen, die das Harz oder Harzgemisch mit oder ohne Hilfsstoffe auf die Kraftpapiere aufstreuen. Die Streumengen können durch die Änderung der Rotationsgeschwindigkeit innerhalb von Minuten geändert/angepasst werden. Der Streuer kann so eingestellt werden, dass sich in den Randbereichen keine Harze befinden. Auch ist die Änderung der Streubreite von z. B. 1340 mm auf 2070 mm problemlos möglich. Weiterhin kann durch Zugabe von Hilfsstoffen ( Flammschutzmittel, Mittel zur Leitfähigkeitserhöhung, Farbpigmente usw. ) eine gewünschte Eigenschaft erzeugt werden. Ein wesentlicher Punkt ist dabei, dass ein Streuer sehr präzise streuen kann (+/- 1 % über die Warenbahnbreite). Auch kann bei sich abzeichnenden Qualitätsproblemen oder Veränderung der Auftragsmenge nach oben oder nach unten reagiert werden. Auch kann das Verhältnis zwischen dem Phenolharz- und dem Melaminharzpulver schnell an den Prozess angepasst werden. Das gleiche gilt für die Zugabe von Hilfsstoffen. Falls unterschiedliche Ausprägungen von Eigenschaften gewünscht sind, kann dies an der Mischvorrichtung schnell angepasst werden. Es können natürlich auch andere bahnförmig verfügbare Produkte verwendet werden, die bei der Imprägnierung Probleme bereiten. Diese Probleme können in der genauen Einstellung des Harzauftrages, der Durchimprägnierung oder im Handling an der Imprägnierlinie usw. bestehen. Auch können nach diesem Verfahren Vorprodukte eingesetzt werden, die gar nicht als Bahnwaren zur Verfügung stehen oder deren Herstellung als Bahnware unwirtschaftlich ist. Dies können Glasvliese, graphithaltige Papiere, Kunststofffolien, Aluminiumfolie oder Furniere sein. Da an einer CPL-Anlage meist nur relativ dünne Produkte hergestellt werden ( Stärke < 1,0 mm ), was bedeutet, dass zwei nur oder drei Kernlagen eingesetzt werden, sind zwei Streuer für die Produktion ausreichend. Es kann natürlich auch auf das oberste NKP reines Melaminharz aufgetragen werden, sodass auch das Dekorpapier ohne Imprägnierung einsetzt werden kann. Da die Pulver wenig bis gar keine Feuchtigkeit enthalten kann durch Bedampfen der NKP vor den Streuern die gewünschte Feuchte eingestellt werden.

Das vorliegende Verfahren bietet somit verschiedene Vorteile. So kann das Verfahren zur Laminat-Herstellung flexibel gestaltet werden. Es ist eine schnelle Anpassung der Auftragsmenge möglich. Durch geringe Schwankung im Prozess sind Kosteneinsparungen möglich.

Das Aufstreuen von Pulver bei der Produktion von mehrlagigen Platten oder Paneele ist in verschiedenen Kombinationen bekannt. So wird gemäß EP 3144449B1 ein Pulvergemisch aus duroplastischen Harzen und Holz- oder Steinpartikeln auf eine Trägerplatte aus verdichteter Holzwolle aufgestreut. Die US 10,51 3,094 B2 beschreibt das Aufstreuen einer pulverförmigen Mischung aus Partikeln aus Abfallpapier und einem Bindemittel auf eine Holzwerkstoffplatte, wie MDF, HDF. In diesen Fällen wird jeweils das Aufstreuen von Pulvergemischen auf kompakte Trägerplatten beschrieben.

Die vorliegend verwendeten Kraftpapierlagen weisen ein Gewicht zwischen 50 und 200 g/m², bevorzugt zwischen 80 und 170 g/m², besonders bevorzugt zwischen 80 und 160 g/m² , wie z.B. 80 g/m², 120 g/m² oder 160 g/m² auf. Wie oben bereits erwähnt, weisen Kraftpapiere eine hohe Festigkeit auf und bestehen aus Zellstofffasern, denen Stärke, Alaun und Leim zugesetzt sind, um Oberflächeneffekte und Festigkeitssteigerungen zu erzielen.

Die mit dem pulverförmigen Harz zu bestreuende Oberfläche bzw. Seite der Kraftpapierlage wird vor dem Aufstreuen des pulverförmigen Harzes zur Verbesserung der Haftung des pulverförmigen Harzes auf der Oberfläche der Kraftpapierlage vorbehandelt. Diese Vorbehandlung kann erfindungsgemäß eine Beaufschlagung der Seite bzw. Oberfläche mit Feuchtigkeit oder eine elektrostatische Aufladung der Seite bzw. Oberfläche der Kraftpapierlage umfassen.

Erfindungsgemäß wird die mindestens eine Kraftpapierlage vor dem Bestreuen mit dem pulverförmigen Harz befeuchtet wird. Dabei wird zum Befeuchten Wasser auf eine Kraftpapierlage in einer Menge zwischen 10 g Wasser/m² und 40 g Wasser/m², z.B. zwischen 10-20 g Wasser/m², zwischen 15-30 g Wasser/m² und/oder zwischen 20-40 g Wasser/m² aufgebracht.

Die Menge des aufgebrachten / aufgesprühten Wassers variiert dabei n Abhängigkeit von dem Papiergewicht (Grammatur) des verwendeten Kraftpapier. So kann für Kraftpapiere mit einem Papiergewicht von 80 - 100 g/m² die aufgesprühte Wassermenge zwischen 10 - 20 g Wasser/m² betragen, für Kraftpapiere mit einem Papiergewicht von 110 - 130 g/m² die aufgesprühte Wassermenge zwischen 15 - 30 g Wasser/m² betragen, und für Kraftpapiere mit einem Papiergewicht von 150 - 170 g/m² die aufgesprühte Wassermenge zwischen 20 - 40 g Wasser/m² betragen

Eine weitere Möglichkeit ist, dass die Pulver durch elektrostatische Aufladung auf den Papieren fixiert werden. Dabei kann das Pulver elektrostatisch aufgeladen werden und auf das Papier aufgebracht werden. Unterhalb der Papierbahn befindet sich eine Gegenelektrode, die eine gute Fixierung auf dem Papier gewährleistet.

Erfindungsgemäß ist das aufzutragende pulverförmige Harz ein Formaldehydharz, bevorzugt ein Melamin-Formaldehyd-Harz oder ein Phenol-Formaldehyd-Harz oder eine Mischung aus einem Melamin-Formaldehyd-Harz und einem Phenol-Formaldehyd-Harz ist. Im Falle der Verwendung einer Mischung aus Phenol-Formaldehyd-Harz und Melamin-Formaldehyd-Harz liegt das Verhältnis beider Harze bei 4:1, bevorzugt 3:2. Die Mischung der zwei Harze erfolgt bevorzugt in einer Mischvorrichtung vor dem Aufstreuen derselbigen auf die Kraftpapierlage.

Die Teilchengröße des pulverförmigen Harzes liegt zwischen 20 bis 100 µm, bevorzugt zwischen 40 und 80 µm.

In einer Ausführungsform des vorliegenden Verfahrens wird das pulverförmige Harz oder Harzgemisch in einer Menge von 100 bis 300 g/m², bevorzugt von 120 bis 280 g/m², insbesondere bevorzugt 150 bis 250 g/m² auf die mindestens eine Kraftpapierlage aufgetragen.

Das pulverförmige Harz wird bevorzugt unter Verwendung mindestens einer Streuapparatur aufgebracht. Die Anzahl der Streuapparaturen vor der CPL-Anlage ist flexibel einstellbar. Das Aufstreuen erfolgt bevorzugt in einem kontinuierlichen Durchlaufprozess. Eine geeignete Streuapparatur ist der Präzisionsstreuer "Oszillierendes Ausbürstsystem" der Fa. TPS. Es kann aber auch eine elektrostatische Applikation mit einer Tribopistole erfolgen.

Auch kann die Streubreite des Streuers beliebig eingestellt werden. So ist es von Vorteil, wenn die Randbereiche der Kraftpapierlagen (z.B. die äußeren zwei Zentimeter) nicht mit Harz bestreut werden., wodurch ein Austreten des Harzes bei der späteren Verpressung vermieden werden kann.

Die Streudichte ist dabei so gewählt, dass der Harzauftrag zwischen 70 und 90 Gew%, bevorzugt zwischen 75 und 85 Gew% bezogen auf zwei Kraftpapierlagen, z.B. 75 Gew%, 77 Gew% oder 85 Gew% beträgt.

Wie bereits erwähnt, wird auf die mit dem Harzpulver bestreute Kraftpapierlage mindestens eine weitere Papierlage aufgelegt. Es können beliebig viele Papierlagen aufgelegt werden, wobei zwei, drei oder vier weitere Papierlagen bevorzugt sind.

Die mindestens eine weitere aufzulegende Papierlage kann eine Kraftpapierlage, eine Dekorpapierlage oder eine Overlaypapierlage sein, Bevorzugt wird eine weitere Kraftpapierlage aufgelegt, gefolgt von einer Dekorpapierlage und/oder Overlaypapierlage. Die möglichen Schicht- oder Deckaufbauten werden im Detail weiter unten beschrieben.

Die verwendeten Papierlagen können mit einem Harz, bevorzugt Melamin-Formaldehyd-Harz vollständig durchtränkt (imprägniert) sein. Im Falle eines vollständig imprägnierten Papiers wird eine Harzmenge von 80 - 400 Gew%, bevorzugt 90-120 Gew%, insbesondere bevorzugt 100-110 Gew% bezogen auf das Papiergewicht des Papiers aufgetragen.

Overlaypapiere sind dünne Papiere, welche typischerweise bereits mit einem konventionellen Melaminharz getränkt wurden Es sind ebenfalls Overlaypapiere erhältlich, in denen bereits abriebfeste Partikel, wie zum Beispiel Korundpartikel in das Harz des Overlays eingemischt sind oder auf das mit Harz benetzte Overlay aufgestreut, um die Abriebfestigkeit zu erhöhen. Für die Imprägnierung von Overlaypapieren werden Harzaufträge mit bis zu 400 Gew% Melaminharz verwendet. Für die meisten Anwendungen ( Laminate für Arbeitspaltten oder Zahltheken ) reichen Overlays ohne Korund aus,

Dekorpapiere sind Spezialpapiere zur Oberflächenveredelung von Holzwerkstoffen, die eine hohe Dekorvielfalt ermöglichen. So sind neben den typischen Aufdrucken von diversen Holzstrukturen weitergehende Aufdrucke von geometrischen Formen oder künstlerischen Produkten erhältlich. Eine Einschränkung in der Motivwahl gibt es faktisch nicht. Um eine optimale Bedruckbarkeit zu gewährleisten, muss das verwendete Papier eine geeignete Glätte und Dimensionsstabilität aufweisen und ebenfalls für eine Penetration einer notwendigen Kunstharzimprägnierung geeignet sein. Der Harzauftrag bei Dekorimprägnaten liegt bei 100 bis 120 Gew%.

In einer weiteren Ausführungsform ist vorgesehen, dass auf die mit dem pulverförmigen Harz bestreuten Seite der Kraftpapierlage zunächst mindestens eine Lage aus einem Beschichtungsmaterials aufgelegt wird, gefolgt von der mindestens einen weiteren Papierlage. Es ist auch möglich Harzpulver auf die Materiallage aufzustreuen, bevor die mindestens eine weitere Papierlage auf die Materiallage aufgelegt wird.

In einer Variante ist dabei vorgesehen, dass auf die mit dem Harzpulver bestreute Seite der Kraftpapierlage eine Materiallage (z.B. Glasvlies) aufgelegt wird, gefolgt von einer zweiten Kraftpapierlage, einer Dekorpapierlage und/oder Overlaypapierlage. In einer weiteren Variante ist vorgesehen, dass auf die mit dem Harzpulver bestreute Seite der Kraftpapierlage eine Materiallage (z.B. Aluminiumfolie) aufgelegt wird, auf welche ebenfalls Harzpulver aufgestreut wird, gefolgt von einer zweiten Kraftpapierlage, einer Dekorpapierlage und/oder Overlaypapierlage.

Es ist aber auch möglich, auf eine zweite Kraftpapierlage und/oder Dekorpapierlage zu verzichten, und auf die Materiallage direkt eine Overlaypapierlage aufzulegen. Art und Reihenfolge der aufgelegten weiteren Papierlagen sind dabei je nach Art der porösen Materiallage flexibel gestaltbar. Ist die poröse Materiallage z.B. farbig gestaltet, kann auf ein Dekorpapier verzichtet werden.

Das mindestens eine Beschichtungsmaterial kann ausgewählt sein aus den folgenden Materialien: eine Furnierlage, graphithaltige Papiere zur Leitfähigkeitserhöhung, Kunststofffolien, insbesondere thermoplastische Folien (ermöglichen enge Postformingradien), Aluminiumfolie, Vliesmaterial und andere Stoffmaterialien. Die verwendeten Beschichtungsmaterialien können entweder eine Porosität aufweisen oder unporös, d.h. undurchlässig für Flüssigkeiten, sein. Insbesondere sind Materialien umfasst, die eine Porosität aufweisen, in der flüssiges Harz während des Verpressens aufsteigen kann und die zumindest teilweise plastisch verformbar sind.

Die Verwendung eines Glasvlieses dient der Verbesserung der Stoßfestigkeit. Die Verwendung von Aluminiumfolien, die vor Auflegen bevorzugt mit einem Primer z.B. Isocyanat-Primer versehen werden, verringert die Wasserdampfdurchlässigkeit. Die Dicke der Aluminiumfolien liegt bei 0,1-0, 3 mm, bevorzug 0,2 mm.

Im Falle der Verwendung einer Furnierlage umfasst diese in einer Ausführungsform mindestens eine Lage aus Echtholzfurnier.

In einer weitergehenden Ausführungsform umfasst das mindestens eine Furnier mindestens eine Echtholz-Lage mit einer Dicke zwischen 0,2-10 mm, bevorzugt 0,5-5 mm, insbesondere bevorzugt 0,5-2 mm. Das Furnier kann einstückig von einem Stamm, zum Beispiel durch Schälen hergestellt sein. Es kann aber auch aus einzelnen Stücken zusammengesetzt sein, die zum Beispiel durch Bindemittel oder sogenannte Leimfäden miteinander verbunden sind. Das Furnier weist bevorzugt die Abmessungen der Trägerplatte auf. Das Furnier weist eine der Trägerplatte zugewandte Unterseite und eine der Trägerplatte abgewandte Oberseite auf.

In einer weitergehenden Ausführungsform des vorliegenden Verfahrens wird der Schichtaufbaus aus Kraftpapierlage und mindestens einer weiteren Papierlage mit mindestens einem Strukturgeberpapier (aufgelegt auf die mindestens eine weitere Papierlage auf der Oberseite der Schichtung) und mindestens einem Transparentpapier (auf der Unterseite der Schichtung) verpresst.

Unter einem Strukturgeberpapier ist dabei ein Papier zu verstehen, das nach Auflegen und Verpressen der Oberfläche des Laminats eine Struktur (z.B. 3D-Struktur) verleiht. Das Strukturgeberpapier hat neben der Strukturierungs- auch eine Schutzfunktion, insbesondere während des Pressschritts. Das Strukturgeberpapier wird nach dem Verpressen des Schicht- oder Deckaufbaus wieder entfernt und kann wiederverwertet werden.

Das vorliegend im Laminat zum Einsatz kommende Transparentpapier ist auch unter dem Begriff Pergamin bekannt. Pergamin ist ein aus fein gemahlenem Zellstoff hergestelltes, weitgehend fettdichtes, aber nicht nassfestes Transparentpapier. Seine hohe Transparenz erhält es durch sehr scharfe Satinage.

Es ist auch vorstellbar, auf der Unterseite des Schichtaufbaus ein zusätzliches Gegenzugpapier zur Stabilisierung des Laminats anzubringen. Gegenzugpapiere sind hochwertige, imprägnierte Papier für den Einsatz als Gegenzugmaterial z. B. für einseitige Flächenfurnierungen und andere einseitige Beschichtungen.

In einer weiteren bevorzugten Ausführungsform des vorliegenden Verfahrens werden dem pulverförmigen Harz ein Additiv, insbesondere ein Flammschutzmittel, zugegeben.

Als Flammschutzmittel können z.B. Acetoguanamin, Ammoniumpolyphosphat, Tris(tribromneopentyl)phosphat, verwendet werden. Das Verhältnis zwischen Flammschutzmittel und Harzpulver liegt bevorzugt bei 1,5 zu 5.

In einer weitergehenden Variante des vorliegenden Verfahrens wird der Schichtaufbau aus mit dem pulverförmigen Harz bestreuten Seite der Kraftpapierlage, ggfs. mindestens einer porösen Materiallage, mindestens einer weiteren Papierlage, insbesondere einer Kraftpapierlage, Dekorpapierlage und/oder Overlaypapierlage, ggfs. einem Strukturgeber, ggfs. ein Transparentpapier und ggfs. einem Gegenzug in einer Heißpresse, insbesondere in einer kontinuierlichen Presse oder in einer Doppelbandpresse, verpresst.

Der Pressschritt in der Presse (CPL- Presse) wird bei einem angelegten Pressdruck zwischen 50 - 70 kg/cm² und einer Temperatur zwischen 150 und 200°C, bevorzugt 180°C, durchgeführt. Die Anlagengeschwindigkeit der Pressanlage ist 5-20 m/min, bevorzugt 5 bis 15 m/min, z.B 9,5 m/min. Das in der Presse hergestellte Laminat weist eine Dicke zwischen 0,15 - 1,2 mm auf.

Das vorliegende Verfahren ermöglicht die Bereitstellung eines Laminates (oder Deck), insbesondere eines CPL, das jeweils mindestens eine harzimprägnierte Kraftpapierlage als Kernlage und weitere Papierlagen, insbesondere Kraftpapierlage, Dekorpapierlage und/oder Overlaypapierlage, aufweist.

In einer Variante umfasst das Laminat mindestens eine Overlaypapierlage, mindestens eine Dekorpapierlage und mindestens zwei Kraftpapierlagen. Ein derartiger Schichtaufbau kann von oben nach unten wie folgt aussehen: Overlaypapierlage, eine Dekorpapierlage, eine erste Kraftpapierlage und eine zweite Kraftpapierlage.

In einer anderen Variante umfasst das Laminat mindestens eine Overlaypapierlage, mindestens eine Dekorpapierlage, mindestens zwei Kraftpapierlagen und mindestens eine Transparenzpapier. Optional kann mindestens ein Gegenzug vorgesehen sein. Ein derartiger Schichtaufbau kann von oben nach unten wie folgt aussehen: Overlaypapierlage, eine Dekorpapierlage, eine erste Kraftpapierlage und eine zweite Kraftpapierlage und ein Transparenzpapier (Pergaminlage).

In einer weiteren Variante umfasst das Laminat mindestens einen Strukturgeber, mindestens eine Overlaypapierlage, mindestens eine Dekorpapierlage, mindestens zwei Kraftpapierlagen und mindestens eine Transparenzpapier. Optional kann mindestens ein Gegenzug vorgesehen sein. Ein derartiger Schichtaufbau kann von oben nach unten wie folgt aussehen: Strukturgeber, Overlaypapierlage, eine Dekorpapierlage, eine erste Kraftpapierlage und eine zweite Kraftpapierlage und ein Transparenzpapier (Pergaminlage).

In einer weiteren Variante umfasst das mit dem vorliegenden Verfahren herstellbare Laminat ggfs. mindestens ein Strukturgeber, mindestens eine Overlaypapierlage, mindestens eine Dekorpapierlage, mindestens zwei Kraftpapierlagen und mindestens ein Transparenzpapier, wobei zwischen den zwei Kraftpapierlagen mindestens ein Flammschutzmittel vorgesehen ist

In einer noch weitergehenden Variante umfasst das mit dem vorliegenden Verfahren herstellbare Laminat ggfs. mindestens ein Strukturgeber, mindestens eine Overlaypapierlage, mindestens eine Dekorpapierlage, mindestens zwei Kraftpapierlagen, mindestens eine Lage eines (porösen) Beschichtungsmaterials, insbesondere Glasvlies oder Aluminiumfolie, und mindestens ein Transparenzpapier. Optional kann mindestens ein Gegenzug vorgesehen sein. Ein derartiger Schichtaufbau kann von oben nach unten wie folgt aussehen: ggfs. ein Strukturgeber, Overlaypapierlage, eine Dekorpapierlage, eine erste Kraftpapierlage, eine Lage eines Beschichtungsmaterials, insbesondere Glasvlies oder Aluminiumfolie, und eine zweite Kraftpapierlage und ein Transparenzpapier (Pergaminlage).

In einer noch weiteren Variante umfasst das mit dem vorliegenden Verfahren herstellbare Laminat ggfs. mindestens ein Strukturgeber, mindestens eine Overlaypapierlage, mindestens eine Kraftpapierlage, mindestens eine Lage eines (porösen) Beschichungsmaterials, insbesondere ein Furnier, und mindestens ein Transparenzpapier. Optional kann mindestens ein Gegenzug vorgesehen sein. Ein derartiger Schichtaufbau kann von oben nach unten wie folgt aussehen: ggfs. ein Strukturgeber, eine Overlaypapierlage, eine Lage eines (porösen) Beschichtungmaterials, insbesondere ein Furnier, eine Kraftpapierlage und ein Transparenzpapier (Pergaminlage).

Der in den obigen Ausführungsformen des Laminates erwähnte Gegenzug wird jeweils im Bedarfsfall aufgenommen, wenn dies erforderlich ist.

Das vorliegende Laminat bzw. Deck weist eine Aufbauhöhe mit einer Dicke zwischen 0,1 und 3mm, bevorzugt zwischen 0,1 und 1,2 mm auf.

Die Erfindung wird nachfolgend an mehreren Ausführungsbeispiel näher erläutert.

Für die folgenden Ausführungsbeispiele wurden die Pulverharze BASF 630 (Melamin-harz) und Prefere 82 8583G0 ( Phenolharz ) eingesetzt.

### Ausführungsbeispiel 1:

Ein 80 g / m² NKP (Breite: 1340 mm) wurde an einer CPL-Anlage von einer Rolle abgewickelt. Mit Hilfe einer Befeuchtungsanlage wurden ca. 10 g Wasser/m² auf das Kraftpapier (Oberseite) aufgedüst.

Unmittelbar vor der Presse wurde ein Gemisch aus Phenol- und Melaminharz auf das NKP aufgestreut. Das Verhältnis zwischen Phenol- und Melaminharz lag bei 3 zu 2. Die Harze wurden in einer Mischvorrichtung gemischt und dann der Streuvorrichtung zugeführt. Die Auftragsmenge lag bei 136 g Harz-gemisch / m² (Harzauftrag: 85 % bezogen auf zwei NKP).

Der Streuer war so eingestellt, dass die Warenbahn beidseitig an den äusseren zwei Zentimetern nicht mit Harzpulver bestreut wurde. Auf das Kraftpapier wurde über eine Abwicklung eine zweite NKP-Lage in der gleichen Grammatur aufgebracht. Darauf wurde ein Dekor- und ein Overlayimprägnat mit der üblichen Beharzung und der üblichen Feuchte aufgelegt.

Dieser Aufbau wurde mit einem Strukturgeber auf der Oberseite und einem Pergament (60 g/m² ) auf der Unterseite mit einer Geschwindigkeit von 9,5 m/min durch die Anlage gefahren. Die Presstemperatur lag bei 180°C, der Pressdruck bei 60 kg/cm². Hinter der Presse war kein Harzaustreten an der Kante beobachtbar. Das resultierende Laminat wurde besäumt und aufgerollt.

Das Laminat wurde anschließend gemäß der DIN EN 438 im Vergleich mit einem mit imprägnierten NKP hergestellten Laminat auf einige wichtige Parameter geprüft (Wasserdampftest, Postforming-Eigenschaften, Kratztest). Dabei konnten keine Unterschiede zwischen den beiden Laminaten festgestellt werden.

### Ausführungsbeispiel 2:

NKP in einer Grammatur von 80, 120 und 160 g / m² (Breite: 1340 mm) wurden an einer CPL-Anlage von einer Rolle abgewickelt. Mit Hilfe einer Befeuchtungsanlage wurden ca. 10 - 20 g Wasser/m² (80 g NKP), 15- 30 g Wasser/m² (120 g NKP) und 20 -40 g Wasser/m² (160 g NKP) auf die Oberseite aufgedüst.

Unmittelbar vor der Presse wurde ein Gemisch aus Phenol- und Melaminharz auf das NKP aufgestreut. Das Verhältnis zwischen Phenol- und Melaminharz lag bei 3 zu 2. Die Harze wurden in einer Mischvorrichtung gemischt und dann der Streuvorrichtung zugeführt. Die Auftragsmengen lagen bei 136 g ( 80 g/m² ), 204 g ( 120g/m² ) und 272 g ( 160 g/m² ) Harzgemisch / m² (Harzauftrag: 85 % bezogen auf zwei NKP).

Der Streuer war so eingestellt, dass die Warenbahn beidseitig an den äusseren zwei Zentimetern nicht mit Harzpulver bestreut wurde. Auf das Kraftpapier wurde über eine Abwicklung eine zweite NKP-Lage in der gleichen Grammatur aufgebracht. Darauf wurde ein Dekor- und ein Overlayimprägnat mit der üblichen Beharzung und der üblichen Feuchte aufgelegt.

Dieser Aufbau wurde mit einem Strukturgeber auf der Oberseite und einem Pergament (60 g/m² ) auf der Unterseite mit einer Geschwindigkeit von 9,5 m/min durch die Anlage gefahren. Die Presstemperatur lag bei 180°C, der Pressdruck bei 60 kg/cm². Hinter der Presse war kein Harzaustreten an der Kante beobachtbar. Das resultierende Laminat wurde besäumt und aufgerollt.

Die Laminate wurde anschließend gemäß der DIN EN 438, Teil 2, "12. Beständigkeit gegenüber Eintauchen in siedendes Wasser" geprüft. Dabei stand die Beurteilung hinsichtlich Delaminierung durch schlechte Harzverteilung/Harzpenetration im Vordergrund. Die Ergebnisse sind in der Tabelle 1 aufgeführt. Bei einem Laminat mit nach dem normalen Imprägnierprozess hergestellten beharzten NKP wird üblicherweise bei der Prüfung "Lagerung in kochendem Wasser" weder eine Blasenbildung noch eine Delaminierung festgestellt.

**Tabelle 1**

| Probe | | NKP 80 g/m² | NKP 120 g/m² | NKP160 g/m² |
|---|---|---|---|---|
| Prüfung | | | | |
| Beständigkeit gegenüber Eintauchen In siedendes Wasser | | | | |
| | - Delaminierung | o. B. | o. B. | o. B. |
| | - Blasenbildung | o. B. | o. B. | o. B. |
| | - Massenzunahme in % | 8,5 | 7,75 | 6,5 |
| | | | | |

### Ausführungsbeispiel 3:

NKP in einer Grammatur von 80, 120 und 160 g / m² (Breite: 1340 mm ) wurden an einer CPL-Anlage von einer Rolle abgewickelt. Mit Hilfe einer Befeuchtungsanlage wurden ca. 10 - 20 g Wasser/m² auf das Kraftpapier (Oberseite) aufgedüst.

Unmittelbar vor der Presse wurde ein Gemisch aus Phenol- und Melaminharz auf das NKP aufgestreut. Das Verhältnis zwischen Phenol- und Melaminharz lag bei 3 zu 2. Die Harze wurden in einer Mischvorrichtung gemischt und dann der Streuvorrichtung zugeführt. Die Auftragsmengen lagen bei 122 g ( 80 g/m² ), 180 g ( 120g/m² ) und 245 g ( 160 g/m² ) Harzgemisch / m² ( Harzauftrag: 77 % bezogen auf zwei NKP).

Der Streuer war so eingestellt, dass die Warenbahn beidseitig an den äusseren zwei Zentimetern nicht mit Harzpulver bestreut wurde. Auf das Kraftpapier wurde über eine Abwicklung eine zweite NKP-Lage in der gleichen Grammatur aufgebracht. Darauf wurde ein Dekor- und ein Overlayimprägnat mit der üblichen Beharzung und der üblichen Feuchte aufgelegt.

Dieser Aufbau wurde mit einem Strukturgeber auf der Oberseite und einem Pergament (60 g/m² ) auf der Unterseite mit einer Geschwindigkeit von 9,5 m/min durch die Anlage gefahren. Die Presstemperatur lag bei 180°C, der Pressdruck bei 60 kg/cm². Hinter der Presse war kein Harzaustreten an der Kante beobachtbar. Das resultierende Laminat wurde besäumt und aufgerollt.

Die Laminate wurde anschließend gemäß der DIN EN 438, Teil 2, "12. Beständigkeit gegenüber Eintauchen in siedendes Wasser" geprüft. Dabei stand die Beurteilung hinsichtlich Delaminierung durch schlechte Harzverteilung/Harzpenetration im Vordergrund. Die Ergebnisse sind in der Tabelle 2 aufgeführt. Bei einem Laminat mit nach dem normalen Imprägnierprozess hergestellten beharzten NKP wird üblicherweise bei der Prüfung " Lagerung in kochendem Wasser " weder eine Blasenbildung noch eine Delaminierung festgestellt.

**Tabelle 2**

| Probe | | NKP 80 g/m² | NKP 120 g/m² | NKP160 g/m² |
|---|---|---|---|---|
| Prüfung | | | | |
| Beständigkeit gegenüber Eintauchen In siedendes Wasser | | | | |
| | - Delaminierung | o. B. | o. B. | o. B. |
| | - Blasenbildung | o. B. | o. B. | o. B. |
| | - Massenzunahme in % | 7,7 | 6,9 | 6,8 |
| | | | | |

Wie aus den Ergebnissen zu entnehmen ist, kann der Harzauftrag um 10 % reduziert werden, ohne dass Qualitätseinbußen feststellbar sind. Erstaunlicherweise liegt die Massenzunahme der Imprägnate mit weniger Harzauftrag niedriger als bei den Laminaten mit höherem Harzauftrag.

### Ausführungsbeispiel 4:

Ein 165 g / m² NKP (Breite 1340 mm) wurde an einer CPL-Anlage von einer Rolle abgewickelt. Mit Hilfe einer Befeuchtungsanlage wurden ca. 20 - 40 g Wasser/m² auf das Kraftpapier ( Oberseite ) aufgedüst.

Unmittelbar vor der Presse wurde ein Gemisch aus Flammschutzmittel (Acetoguanamin), Phenol- und Melaminharz auf das NKP aufgestreut. Das Verhältnis zwischen Guanamin, Phenol- und Melaminharz lag bei 1,5 zu 3 zu 2. Die Auftragsmenge lag bei 316 g Harz + Flammschutzmittel /m² (Harzauftrag: 75 % bezogen auf zwei NKP).

Der Streuer war so eingestellt, dass die äusseren 2 cm der Warenbahn nicht mit Harzpulver bestreut wurden. Auf das Kraftpapier wurde über eine Abwicklung eine zweite NKP-Lage in der gleichen Grammatur aufgebracht. Darauf wurde ein Dekor- und ein Overlayimprägnat mit der üblichen Beharzung und der üblichen Feuchte aufgelegt.

Dieser Aufbau wurde mit einem Strukturgeber auf der Oberseite und einem Pergament (60 g/m²) auf der Unterseite mit einer Geschwindigkeit von 9,5 m/min durch die Anlage gefahren. Die Presstemperatur lag bei 180°C, der Pressdruck bei 60 kg/cm².

Das resultierende Laminat wurde aufgerollt. Das Laminat wurde anschließend gemäß der DIN EN 13 501-1: 2018 ( Klassifizierung des Brandverhaltens ) geprüft. Es wurde des Ergebnis c - s1, d0 erreicht.

### Ausführungsbeispiel 5:

Ein 80 g / m² NKP (Breite: 1340 mm) wurde an einer CPL-Anlage von einer Rolle abgewickelt. Mit Hilfe einer Befeuchtungsanlage wurden ca. 10 g Wasser/m² auf das Kraftpapier (Oberseite) aufgedüst. Unmittelbar vor der Presse wurde ein Gemisch aus Phenol- und Melaminharz auf das NKP aufgestreut.

Das Verhältnis zwischen Phenol- und Melaminharz lag bei 3 zu 2. Die Harze wurden in einer Mischvorrichtung gemischt und dann der Streuvorrichtung zugeführt. Die Auftragsmenge lag bei 136 g Harzgemisch / m² (Harzauftrag: 85 % bezogen auf zwei NKP).

Der Streuer war so eingestellt, dass die Warenbahn beidseitig an den äusseren zwei Zentimetern nicht mit Harzpulver bestreut wurde. Auf das Kraftpapier wurde ein Glasvlies (Grammatur: 110 g/m²) abgerollt und ebenfalls 136 g/m² Harz aufgestreut. Das Glasvlies diente zur Verbesserung der Stoßfestigkeit. Auf das Vlies wurde über eine Abwicklung eine zweite NKP-Lage in der gleichen Grammatur aufgebracht. Darauf wurde ein Dekor- und ein Overlayimprägnat mit der üblichen Beharzung und der üblichen Feuchte aufgelegt.

Dieser Aufbau wurde mit einem Strukturgeber auf der Oberseite und einem Pergament (60 g/m²) auf der Unterseite mit einer Geschwindigkeit von 9,5 m/min durch die Anlage gefahren. Die Presstemperatur lag bei 180°C, der Pressdruck bei 60 kg/cm². Hinter der Presse war kein Harzaustreten an der Kante beobachtbar. Das resultierende Laminat wurde besäumt und aufgerollt.

Das Laminat wurde anschließend gemäß der DIN EN 438 im Vergleich mit einem mit imprägnierten NKP hergestellten Laminat auf einige wichtige Parameter geprüft (Wasserdampftest, Kratztest). Dabei konnten keine Unterschiede zwischen den beiden Laminaten festgestellt werden. Zur Prüfung des Laminatverbundes wurde eine Lagerung in heissem Wasser (2h) durchgeführt. Es wurde keine Blasenbildung oder Delaminierung festgestellt. Die Wasseraufnahme lag bei 5,5%.

### Ausführungsbeispiel 6:

Ein 80 g / m² NKP (Breite: 1340 mm) wurde an einer CPL-Anlage von einer Rolle abgewickelt. Mit Hilfe einer Befeuchtungsanlage wurden ca. 10 g Wasser/m² auf das Kraftpapier (Oberseite) aufgedüst. Unmittelbar vor der Presse wurde ein Gemisch aus Phenol- und Melaminharz auf das NKP aufgestreut.

Das Verhältnis zwischen Phenol- und Melaminharz lag bei 3 zu 2. Die Harze wurden in einer Mischvorrichtung gemischt und dann der Streuvorrichtung zugeführt. Die Auftragsmenge lag bei 68 g Harzgemisch / m² (Harzauftrag: 85 % bezogen auf zwei NKP).

Der Streuer war so eingestellt, dass die Warenbahn beidseitig an den äußeren zwei Zentimetern nicht mit Harzpulver bestreut wurde. Auf das Kraftpapier wurde eine beidseitig geprimerte 0,2 mm Aluminiumfolie zur Verringerung der Wasserdampfdurchlässigkeit abgerollt und ebenfalls 68 g/m² Harz aufgestreut. Auf die Aluminiumfolie wurde über eine Abwicklung eine zweite NKP-Lage in der gleichen Grammatur aufgebracht. Darauf wurde ein Dekor- und ein Overlayimprägnat mit der üblichen Beharzung und der üblichen Feuchte aufgelegt.

Dieser Aufbau wurde mit einem Strukturgeber auf der Oberseite und einem Pergament (60 g/m² ) auf der Unterseite mit einer Geschwindigkeit von 9,5 m/min durch die Anlage gefahren. Die Presstemperatur lag bei 180°C, der Pressdruck bei 60 kg/cm². Hinter der Presse war kein Harzaustreten an der Kante beobachtbar. Das resultierende Laminat wurde besäumt und aufgerollt.

### Ausführungsbeispiel 7:

Ein 80 g / m² NKP ( Breite: 1340 mm ) wurde an einer CPL-Anlage von einer Rolle abgewickelt. Mit Hilfe einer Befeuchtungsanlage wurden ca. 10 g Wasser/m² auf das Kraftpapier (Oberseite) aufgedüst.

Unmittelbar vor der Presse wurde ein Gemisch aus Phenol- und Melaminharz auf das NKP aufgestreut. Das Verhältnis zwischen Phenol- und Melaminharz lag bei 3 zu 2. Die Harze wurden in einer Mischvorrichtung gemischt und dann der Streuvorrichtung zugeführt.

Die Auftragsmenge lag bei 210 g Harzgemisch / m² (Harzauftrag: 85 % bezogen auf zwei NKP). Der Streuer war so eingestellt, dass die Warenbahn beidseitig an den äußeren zwei Zentimetern nicht mit Harzpulver bestreut wurde. Auf das Kraftpapier wurde ein Eichenfurnier (Stärke: 0,5 mm) im Format 1400 x 1340 mm aufgelegt. Darauf wurde ein Overlayimprägnat mit der üblichen Beharzung und der üblichen Feuchte aufgelegt.

Dieser Aufbau wurde mit einem Strukturgeber auf der Oberseite und einem Pergament (60 g/m²) auf der Unterseite mit einer Geschwindigkeit von 9,5 m/min durch die Anlage gefahren. Die Presstemperatur lag bei 180°C, der Pressdruck bei 60 kg/cm². Das resultierende Laminat zeigte keine Delaminierungen. Die Transparenz war gut.

## Patentansprüche

1. Verfahren zur Herstellung eines Laminates, insbesondere eines Continuous Pressure Laminates (CPLs), umfassend
mindestens eine Kraftpapierlage mit den folgenden Schritten:
- Bereitstellen von mindestens einer Kraftpapierlage,
- Befeuchten der mindestens einen Kraftpapierlage;
- Aufstreuen von mindestens einer ersten Schicht aus mindestens einem pulverförmigen Formaldehyd-Harz auf mindestens eine Seite der Kraftpapierlage,
- Auflegen von mindestens einer weiteren Papierlage auf die mit dem pulverförmigen Formaldehyd-Harz bestreuten Seite der Kraftpapierlage, und
- Verpressen des Schichtaufbaus in einer CPL-Presse.

2. Verfahren nach Anspruch 1, **dadurch gekennzeichnet, dass** die mindestens eine Kraftpapierlage ein Gewicht zwischen 50 und 200 g/m², bevorzugt zwischen 80 und 170 g/m², besonders bevorzugt zwischen 80 und 160 g/m², ganz besonders bevorzugt zwischen 80 und 120 g/m² aufweist.

3. Verfahren nach einem der vorhergehenden Ansprüche, **dadurch gekennzeichnet, dass** zum Befeuchten Wasser auf eine Kraftpapierlage in einer Menge zwischen 10 g Wasser/m² und 40 g Wasser/m², z.B. zwischen 10 - 20 g Wasser/m², zwischen 15 - 30 g Wasser/m² und/oder zwischen 20 - 40 g Wasser/m² aufgebracht wird.

4. Verfahren nach Anspruch 3, **dadurch gekennzeichnet, dass** für Kraftpapiere mit einem Papiergewicht von 80 - 100 g/m² die aufgesprühte Wassermenge zwischen 10 - 20 g Wasser/m² beträgt, für Kraftpapiere mit einem Papiergewicht von 110 - 130 g/m² die aufgesprühte Wassermenge zwischen 15 - 30 g Wasser/m² beträgt, und für Kraftpapiere mit einem Papiergewicht von 150 - 170 g/m² die aufgesprühte Wassermenge zwischen 20 - 40 g Wasser/m² beträgt.

5. Verfahren nach einem der vorhergehenden Ansprüche, **dadurch gekennzeichnet, dass** das pulverförmige Formaldehydharz ein Melamin-Formaldehyd-Harz oder ein Phenol-Formaldehyd-Harz oder eine Mischung aus einem Melamin-Formaldehyd-Harz und einem Phenol-Formaldehyd-Harz ist.

6. Verfahren nach einem der vorhergehenden Ansprüche, **dadurch gekennzeichnet, dass** das pulverförmige Harz in einer Menge von 100 bis 300 g/m², bevorzugt von 120 bis 280 g/m², insbesondere bevorzugt 150 bis 250 g/m² auf die mindestens eine Kraftpapierlage aufgetragen wird.

7. Verfahren nach einem der vorhergehenden Ansprüche, **dadurch gekennzeichnet, dass** die mindestens eine weitere aufzulegende Papierlage eine Kraftpapierlage, eine Dekorpapierlage oder eine Overlaypapierlage, bevorzugt eine Kraftpapierlage, ist.

8. Verfahren nach einem der vorhergehenden Ansprüche, **dadurch gekennzeichnet, dass** auf die mit dem pulverförmigen Harz bestreuten Seite der Kraftpapierlage zunächst mindestens eine Lage eines Beschichtungsmaterials aufgelegt wird, gefolgt von der mindestens einen weiteren Papierlage.

9. Verfahren nach Anspruch 8, **dadurch gekennzeichnet, dass** als Beschichtungsmateriallage eine Furnierlage, ein graphithaltiges Papier, Kunststofffolie, Aluminiumfolie, Vliesmaterial und andere Stoffmaterialien verwendet werden.

10. Verfahren nach einem der vorhergehenden Ansprüche, **dadurch gekennzeichnet, dass** der Schichtaufbaus aus Kraftpapierlage und mindestens einer weiteren Papierlage mit mindestens einem Strukturgeberpapier und mindestens einem Transparentpapier verpresst wird.

11. Verfahren nach einem der vorhergehenden Ansprüche, **dadurch gekennzeichnet, dass** dem pulverförmigen Harz ein Additiv, insbesondere ein Flammschutzmittel, zugegeben werden.

12. Verfahren nach einem der vorhergehenden Ansprüche, **dadurch gekennzeichnet, dass** der Schichtaufbau aus mit dem pulverförmigen Harz bestreuten Seite der Kraftpapierlage, ggfs. mindestens einer Beschichtungsmateriallage, mindestens einer weiteren Papierlage, insbesondere einer Kraftpapierlage, Dekorpapierlage und/oder Overlaypapierlage, ggfs. einem Strukturgeber, ggfs. ein Transparentpapier und ggfs. einem Gegenzug in einer Heißpresse, insbesondere in einer kontinuierlichen Presse oder in einer Doppelbandpresse, verpresst wird.

## Claims

1. Method for producing a laminate, in particular a continuous pressure laminate (CPL), comprising at least one kraft paper layer with the following steps:
- Providing at least one layer of kraft paper,
- Moistening the at least one layer of kraft paper;
- Spreading at least a first layer of at least one powdered formaldehyde resin on at least one side of the kraft paper layer,
- Placing at least one further layer of paper on the side of the kraft paper layer sprinkled with the powdered formaldehyde resin, and
- Pressing the layer structure in a CPL press.

2. Method according to claim 1, **characterized in that** the at least one kraft paper layer has a weight of between 50 and 200 g/m², preferably between 80 and 170 g/m², particularly preferably between 80 and 160 g/m², most preferably between 80 and 120 g/m².

3. Method according to one of the preceding claims, **characterized in that**, for moistening, water is applied to a kraft paper layer in an amount between 10 g water/m² and 40 g water/m², for example between 10 - 20 g water/m², between 15 - 30 g water/m² and/or between 20 - 40 g water/m².

4. Method according to claim 3, **characterized in that** for kraft papers with a paper weight of 80 - 100 g/m² the amount of water sprayed on is between 10 - 20 g water/m², for kraft papers with a paper weight of 110 - 130 g/m² the amount of water sprayed on is between 15 - 30 g water/m², and for kraft papers with a paper weight of 150 - 170 g/m² the amount of water sprayed on is between 20 - 40 g water/m².

5. Method according to one of the preceding claims, **characterized in that** the powdered formaldehyde resin is a melamine-formaldehyde resin or a phenol-formaldehyde resin or a mixture of a melamine-formaldehyde resin and a phenol-formaldehyde resin.

6. Method according to one of the preceding claims, **characterized in that** the powdered resin is applied to the at least one kraft paper layer in an amount of 100 to 300 g/m², preferably 120 to 280 g/m², in particular preferably 150 to 250 g/m².

7. Method according to one of the preceding claims, **characterized in that** the at least one further paper layer to be applied is a kraft paper layer, a decor paper layer or an overlay paper layer, preferably a kraft paper layer.

8. Method according to one of the preceding claims, **characterized in that** at least one layer of a coating material is first applied to the side of the kraft paper layer sprinkled with the powdered resin, followed by the at least one further paper layer.

9. Method according to claim 8, **characterized in that** a veneer layer, a graphite-containing paper, plastic film, aluminum foil, non-woven material and other fabric materials are used as the coating material layer.

10. Method according to one of the preceding claims, **characterized in that** the layered structure of kraft paper layer and at least one further paper layer is pressed with at least one structuring paper and at least one transparent paper.

11. Method according to one of the preceding claims, **characterized in that** an additive, in particular a flame retardant, is added to the powdered resin.

12. Method according to one of the preceding claims, **characterized in that** the layer structure comprising the side of the kraft paper layer sprinkled with the powdery resin, optionally at least one coating material layer, at least one further paper layer, in particular a kraft paper layer, decor paper layer and/or overlay paper layer, optionally a structuring paper, optionally a transparent paper and optionally a backing paper is pressed in a hot press, in particular in a continuous press or in a double belt press.

## Revendications

1. Procédé de fabrication d'un stratifié, en particulier d'un stratifié à pression continue (CPL), comprenant au moins une couche de papier kraft, avec les étapes suivantes :
- de mise à disposition d'au moins une couche de papier kraft,
- d'humidification de l'au moins une couche de papier kraft ;
- de répartition d'au moins une première couche d'au moins une résine de formaldéhyde pulvérulente sur au moins un côté de la couche de papier kraft,
- d'application d'au moins une couche de papier supplémentaire sur le côté de la couche de papier kraft saupoudré de résine de formaldéhyde pulvérulente, et
- de pressage de la structure de couches dans une presse CPL.

2. Procédé selon la revendication 1, **caractérisé en ce que** l'au moins une couche de papier kraft présente un poids compris entre 50 et 200 g/m², de manière préférée entre 80 et 170 g/m², de manière particulièrement préférée entre 80 et 160 g/m², de manière tout particulièrement préférée entre 80 et 120 g/m².

3. Procédé selon l'une quelconque des revendications précédentes, **caractérisé en ce que** de l'eau est appliquée pour l'humidification sur une couche de papier kraft en une quantité comprise entre 10 g d'eau/m² et 40 g d'eau/m², par exemple entre 10 - 20 g d'eau/m², entre 15 - 30 g d'eau/m² et/ou entre 20 - 40 g d'eau/m².

4. Procédé selon la revendication 3, **caractérisé en ce que** pour les papiers kraft d'un poids de papier de 80 - 100 g/m ², la quantité d'eau pulvérisée est comprise entre 10 - 20 g d'eau/m ², pour les papiers kraft d'un poids de papier de 110 - 130 g/m ², la quantité d'eau pulvérisée est comprise entre 15 - 30 g d'eau/m ², et pour les papiers kraft d'un poids de papier de 150 - 170 g/m ², la quantité d'eau pulvérisée est comprise entre 20 - 40 g d'eau/m ².

5. Procédé selon l'une quelconque des revendications précédentes, **caractérisé en ce que** la résine de formaldéhyde pulvérulente est une résine de mélamine-formaldéhyde ou une résine de phénol-formaldéhyde ou un mélange d'une résine de mélamine-formaldéhyde et d'une résine de phénol-formaldéhyde.

6. Procédé selon l'une quelconque des revendications précédentes, **caractérisé en ce que** la résine pulvérulente est appliquée sur l'au moins une couche de papier kraft en une quantité de 100 à 300 g/m², de manière préférée de 120 à 280 g/m², en particulier de manière préférée de 150 à 250 g/m².

7. Procédé selon l'une quelconque des revendications précédentes, **caractérisé en ce que** l'au moins une couche de papier supplémentaire à appliquer est une couche de papier kraft, une couche de papier décoratif ou une couche de papier de recouvrement, de manière préférée une couche de papier kraft.

8. Procédé selon l'une quelconque des revendications précédentes, **caractérisé en ce qu'**au moins une couche d'un matériau de revêtement est d'abord appliquée sur le côté de la couche de papier kraft saupoudré de résine pulvérulente, suivie de l'au moins une couche de papier supplémentaire.

9. Procédé selon la revendication 8, **caractérisé en ce qu'**une couche de placage, un papier contenant du graphite, un film plastique, un film d'aluminium, un matériau non tissé et d'autres matériaux textiles sont utilisés comme couche de matériau de revêtement.

10. Procédé selon l'une quelconque des revendications précédentes, **caractérisé en ce que** la structure de couches composée d'une couche de papier kraft et d'au moins une couche de papier supplémentaire est pressée avec au moins un papier structurant et au moins un papier transparent.

11. Procédé selon l'une quelconque des revendications précédentes, **caractérisé en ce qu'**un additif, notamment un retardateur de flammes, est ajouté à la résine pulvérulente.

12. Procédé selon l'une quelconque des revendications précédentes, **caractérisé en ce que** la structure de couches composée du côté de la couche de papier kraft saupoudré de résine pulvérulente, le cas échéant d'au moins une couche de matériau de revêtement, d'au moins une couche de papier supplémentaire, en particulier d'une couche de papier kraft, d'une couche de papier décoratif et/ou d'une couche de papier de recouvrement, le cas échéant d'un structurant, le cas échéant un papier transparent, et le cas échéant un papier à contre-traction est pressée dans une presse à chaud, en particulier dans une presse continue ou dans une presse à double bande.
